# EUROPEAN PATENT APPLICATION

(11) **EP 1 550 853 A1**
(43) Date of publication of application: **06.07.2005**
(21) Application number: 03728113.6
(22) Date of filing: 19.05.2003
(51) Int. Cl.: G01N 1/00, G01N 21/09, G01N 33/48, G01N 35/02, B01J 19/00, B01L 3/14, C12M 1/00, C12N 15/00

(54) **BIOCHEMICAL CONTAINER**

(30) Priority: 25.07.2002 JP 2002216544; 21.11.2002 JP 2002337757
(71) Applicant: Nippon Sheet Glass Co.,Ltd., Tokyo 105-8552 (JP)
(72) Inventor: FUJITA, Koji c/o NIPPON SHEET GLASS CO., LTD., Tokyo 105-8552 (JP)
(74) Representative: Brommer, Hans Joachim, Dr.-Ing.
(86) International application number: PCT/JP2003/006253
(87) International publication number: WO 2004/011912

(57) **Abstract**

There is provided a biochemical vessel which has high organic solvent resistance and which can be easily manufactured and allows the ultraviolet spectrometry. The vessel comprises a synthetic resin vessel body (10) having ultraviolet transparency and forming a plurality of recesses (12) side by side, at least inner face portions of the plurality of recesses (12) being coated with a silicon dioxide film (11). With this, by receiving e.g. samples made of an organic solvent in these portions (referred to as "sample receiving portions"), the vessel can be reused repeatedly without being dissolved. Moreover, the synthetic resin vessel body (10) forming the plurality of recesses (12) side by side can be made easily of a synthetic resin having ultraviolet transparency and the inner face portions of its recesses (12) can be coated with a silicon dioxide film (11) by a desired method. Therefore, the biochemical vessel having the invention's characterizing feature can be manufactured easily.

## Description

### Technical Field

The present invention relates to a vessel for biochemical use.

### Background Art

This type of vessel for biochemical use is often employed for analysis or culture of DNA, etc. In this field, it is required to effect the analysis, culture or the like on a great number of samples. For this reason, to allow the analysis or culture of a plurality of kinds of sample by a single vessel, there is generally employed a biochemical vessel (e.g. a microplate) configured to have a plurality of sample wells.

And, in the case of DNA, as its double helix structure includes, at its outermost portion, a phosphoric acid which has a very high affinity for water molecules, samples in the form of aqueous solutions are often employed. Hence, as the sole requirement for this type of biochemical vessel is water resistance, vessels made of inexpensive synthetic resins (e.g. polystyrene resin) are generally employed (see e.g. Japanese Patent Application "Kokai" No. 10-78388).

Recently, there has been proposed a genetic analysis method which employs a reversed micelle as a reaction field for DNA and observes hybridization behavior of the DNA under the specific environment of the reversed micelle through ultraviolet spectrometry (see e.g. Japanese Patent Application "Kokai" No. 14-171988). There has been a great interest from the industry in this proposed genetic analysis method because this method facilitates the genetic analysis.

However, as this genetic analysis method employs a reversed micelle as the reaction field for DNA, samples thereof are prepared in the form of an organic solvent (e.g. isooctane), not aqueous solution.

Then, the above-described conventionally employed biochemical vessel made of a synthetic resin such as polystyrene resin causes a problem of non-reusability since the resin tends to be dissolved by the organic solvent. Therefore, there is a growing need for a biochemical vessel having high resistance for organic solvents.

On the other hand, as a biochemical vessel having such high organic solvent resistance, thus allowing also the ultraviolet spectrometry described above, it is conceivable to employ a vessel made solely of quartz. However, quartz is very difficult to be machined. And, this type of biochemical vessel needs to be configured to allow simultaneous determination of a plurality of kinds of sample. Such construction is not very practical.

The present invention has been made in view of the above-described state of the art. Its object is to provide a biochemical vessel which has high organic solvent resistance and which can be easily manufactured and allows the ultraviolet spectrometry.

### Disclosure of the Invention

According to a first characterizing feature of the present invention, the vessel comprises a synthetic resin vessel body having ultraviolet transparency and forming a plurality of recesses side by side and at least inner face portions of the plurality of recesses are coated with a silicon dioxide film.

As the inner face portions of the plurality of recesses are coated with a silicon dioxide film having high organic solvent resistance, by receiving e.g. samples made of an organic solvent in these portions (referred to as "sample receiving portions"), the vessel can be reused repeatedly without being dissolved. Moreover, the synthetic resin vessel body forming the plurality of recesses side by side can be made easily of a synthetic resin having ultraviolet transparency and the inner face portions of its recesses can be coated with a silicon dioxide film by a desired method. Therefore, the biochemical vessel having the invention's characterizing feature can be manufactured easily. In addition, since this synthetic resin vessel body and the silicon dioxide film both have good ultraviolet transparency, the ultraviolet spectrometry can be effectively carried out on the samples received in the sample receiving recesses.

Consequently, it has become possible to provide a biochemical vessel which has high organic solvent resistance and which can be easily manufactured and allows the ultraviolet spectrometry.

According to a second characterizing feature of the present invention, in addition to the first characterizing feature described above, the silicon dioxide film is formed by a liquid phase method.

If the silicon dioxide film is formed by a liquid phase method, the film can easily be coated with a uniform thickness on the inner face portions of the plural recesses. Especially, the spectrometry such as ultraviolet spectrometry can be carried out with high precision advantageously.

According to a third characterizing feature of the present invention, the vessel comprises a glass substrate having ultraviolet transparency and a plurality of cylindrical members formed of an inorganic material, the cylindrical members being attached erect on the substrate via an inorganic adhesive.

In this case, the vessel can be formed by attaching erect a plurality of cylindrical members formed of an inorganic material on a glass substrate having ultraviolet transparency via an inorganic adhesive. Therefore, the vessel can be manufactured easily. Moreover, if e.g. a sample made of an organic solvent is received within a space delimited by each cylindrical member attached erect and the glass substrate, a plurality of samples can be received without being mixed and the vessel can be reused repeatedly without being dissolved. Further, since the glass substrate has ultraviolet transparency, the ultraviolet spectrometry can be carried out on the sample received within a space delimited by each cylindrical member attached erect and the glass substrate.

Consequently, it has become possible to provide a biochemical vessel which has high organic solvent resistance and which can be easily manufactured and allows the ultraviolet spectrometry.

Also, since the upper face and the lower face of the glass substrate are flat surfaces, a visible light beam, a ultraviolet beam, an X ray or the like used in the spectrometry is caused to enter this glass substrate along the vertical direction, the spectrometry can be carried out with high precision advantageously. Hence, this vessel can be advantageously employed as e.g. a determination plate for a microplate reader.

According to a fourth characterizing feature of the present invention, the vessel comprises a glass substrate having ultraviolet transparency and a plate-like body formed of an inorganic material and defining a plurality of through holes along a thickness thereof, said plate-like body being bonded to the substrate via an inorganic adhesive.

In this case, the vessel can easily be formed by bonding the plate-like body formed of an inorganic material to the glass substrate via the inorganic adhesive. Hence, the vessel can be manufactured easily. Moreover, as the plate-like body to be bonded defines a plurality of through holes along a thickness thereof, if e.g. a sample made of an organic solvent is received within a space delimited by each through hole and the glass substrate, a plurality of samples can be received without being mixed and the vessel can be reused repeatedly without being dissolved. Further, since the glass substrate has ultraviolet transparency, the ultraviolet spectrometry can be carried out on the sample received within a space delimited by each through hole and the glass substrate.

Consequently, it has become possible to provide a biochemical vessel which has high organic solvent resistance and which can be easily manufactured and allows the ultraviolet spectrometry.

Also, since the upper face and the lower face of the glass substrate are flat surfaces, a visible light beam, a ultraviolet beam, an X ray or the like used in the spectrometry is caused to enter this glass substrate along the vertical direction, the spectrometry can be carried out with high precision advantageously. Hence, this vessel can be advantageously employed as e.g. a determination plate for a microplate reader.

According to a fifth characterizing feature of the present invention, in addition to the fourth characterizing feature described above, at least one of said plate-like body and said glass substrate defines a concave portion to form a hollow portion in said plate-like body and/or said glass substrate when the plate-like body and the glass substrate are bonded to each other.

The biochemical vessel comprising the glass substrate and the plate-like body formed of an inorganic material bonded to the substrate is heavy and difficult to handle and has poor work efficiency, compared with a biochemical vessel formed of a resin. However, in the case of the above construction, since at least one of said plate-like body and said glass substrate defines a concave portion to form a hollow portion in said plate-like body and/or said glass substrate when the plate-like body and the glass substrate are bonded to each other , the vessel can be formed lighter. And, this biochemical vessel can have high organic solvent resistance and be manufactured easily and allows the ultraviolet spectrometry, yet, this can be readily handled by an automatic determining device such as a microplate reader, whereby the work efficiency can be improved.

According to a sixth characterizing feature of the present invention, in addition to the third or fourth characterizing feature described above, said inorganic adhesive comprises a low-melting-point glass or a metal solder.

Since the low-melting-point glass or the metal solder has high organic solvent resistance, the vessel will not be dissolved by e.g. a sample made of an organic solvent. And, even if the vessel is reused repeatedly, a plurality of samples can be reliably received in the vessel without being mixed, advantageously.

According to a seventh characterizing feature of the present invention, the vessel comprises an ultraviolet transparent glass molded product defining a plurality of holes disposed side by side and each having a flat bottom face.

With such ultraviolet transparent glass molded product, the vessel can be formed by introducing ultraviolet transparent glass under its melted or softened condition into a predetermined mold and then machining the glass to define a plurality of holes disposed side by side and having flat bottom faces. Hence, the vessel can be manufactured easily. Moreover, since the vessel is formed of the ultraviolet transparent glass, when e.g. samples made of organic solvent are received in its holes, the vessel is not dissolved and the ultraviolet spectrometry can be carried out effectively. Further, since these plurality of holes have flat bottom faces, when a visible light beam, a ultraviolet beam, an X ray or the like used in the spectrometry is caused to enter this bottom face along the vertical direction, the spectrometry can be carried out with high precision advantageously. Hence, this vessel can be advantageously employed as e.g. a determination plate for a microplate reader.

According to an eighth characterizing feature of the present invention, in addition to the seventh characterizing feature described above, said holes are tapered from their openings toward their bottom faces.

Since the holes are tapered from their openings toward their bottom faces, the vessel can be washed easily to be advantageous for its reuse. Also, the vessel can be molded easily.

According to a ninth characterizing feature of the present invention, the vessel comprises a plate-like substrate defining a plurality of through holes along its thickness and a ultraviolet transparent glass container received within each said through hole, with an outer peripheral face of the glass container being fixed in a gapless manner to an inner peripheral face of said through hole.

In this case, a plurality of through holes are defined in a plate-like substrate and a ultraviolet transparent glass container is received within each of the through holes, with an outer peripheral face of the glass container being fixed in a gapless manner to an inner peripheral face of said through hole. Therefore, by receiving a sample made of e.g. organic solvent in the glass container, the vessel can be reused repeatedly without being dissolved for example. Further, since the ultraviolet transparent glass container is received within each through hole defined in the plate-like substrate with the bottom of the glass container facing the lower face, the ultraviolet transparency can be ensured, without particularly limiting the material to form the plate-like substrate. Hence, the biochemical vessel having this feature can be manufactured easily and the ultraviolet spectrometry can be carried out effectively on the sample received within the glass container.

Consequently, it has become possible to provide a biochemical vessel which has high organic solvent resistance and which can be easily manufactured and allows the ultraviolet spectrometry.

### Brief Description of the Drawings

Fig. 1 are explanatory views of a first embodiment of a biochemical vessel relating to the present invention, (A) being a perspective view showing an entire shape of the vessel, (B) being a partially enlarged section,
Fig. 2 are explanatory views of a second embodiment of a biochemical vessel relating to the present invention, (A) being a perspective view showing an entire shape of the vessel, (B) being a partially enlarged section,
Fig. 3 are explanatory views of a third embodiment of a biochemical vessel relating to the present invention, (A) being a perspective view showing an entire shape of the vessel, (B) being a partially enlarged section,
Fig. 4 are explanatory views of a fourth embodiment of a biochemical vessel relating to the present invention, (A) being a perspective view showing an entire shape of the vessel, (B) being a partially enlarged section,
Fig. 5 are explanatory views of a fifth embodiment of a biochemical vessel relating to the present invention, (A) being a partially cutaway perspective view showing an entire shape of the vessel, (B) being a partially enlarged section,
Fig. 6 are explanatory views of a sixth embodiment of a biochemical vessel relating to the present invention, (A) being a partially cutaway perspective view showing an entire shape of the vessel, (B) being a partially enlarged section,
Fig. 7 are explanatory views of a seventh embodiment of a biochemical vessel relating to the present invention, (A) being a partially cutaway perspective view showing an entire shape of the vessel, (B) being a partially enlarged section,
Fig. 8 is a perspective view illustrating a manufacturing method,
Fig. 9 is a partially enlarged section illustrating a manufacturing method of a biochemical vessel according to an eighth embodiment of the invention, and
Fig. 10 is a partially enlarged section illustrating a night embodiment of a biochemical vessel relating to the present invention.

### Best Mode of Embodying Invention

### [First Embodiment]

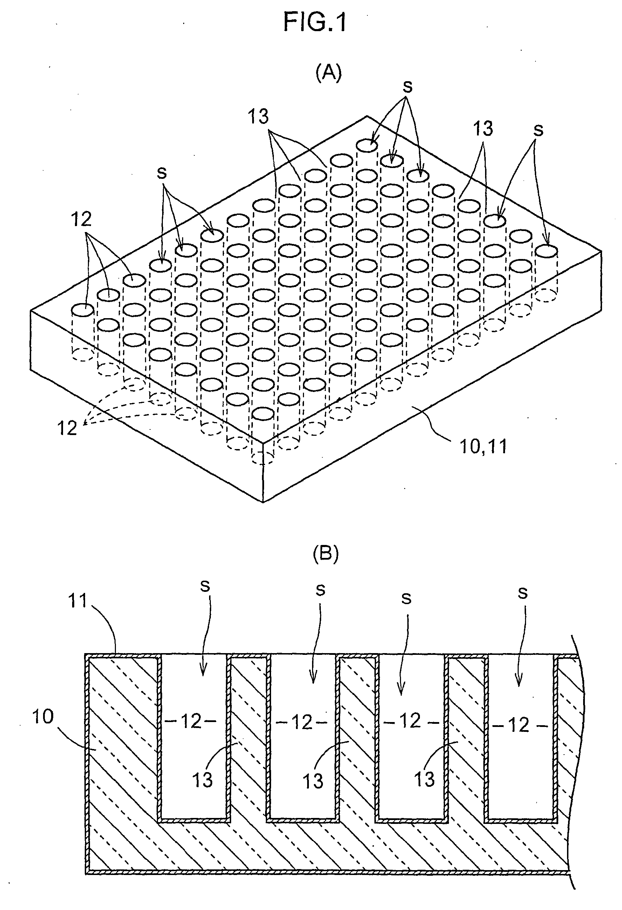

Figs. 1(A) and (B) show an example of the first embodiment of the present invention. Fig. 1 (A) is a perspective view showing an entire biochemical vessel and Fig. 1 (B) is its partially enlarged section view.

As shown in Fig. 1, this biochemical vessel, as an example, is formed by coating an outer side of a synthetic resin vessel body 10 with a silicon dioxide film 11.

This synthetic resin vessel body 10 comprises a substantially rectangular body as a whole consisting of a number of recesses 12 and wall portions 13, the recesses 12 being provided as cylindrical portions disposed side by side and extending along the vertical direction. And, as shown in the figure, the many recesses 12 are partitioned from each other by the wall portions 13.

And, the entire outer side of the synthetic resin vessel body 10 constructed as above is coated with the silicon dioxide film 11.

In this manner, this biochemical vessel includes many cells (s) formed by coating the insides of the recesses 12 with the silicon dioxide film 11. In operation, by receiving a plurality of samples within the cells (s) without being mixed with each other, e.g. various analyses or culture of DNA can be carried out. Incidentally, in this embodiment, 8 x 12 = 96 cells (s) are formed as an example.

Next, one exemplary manufacturing method of such biochemical vessel as above will be briefly described.

First, the synthetic resin vessel body 10 is formed by a desired method of any of synthetic resins having ultraviolet transparency, such as polystyrene resin, into the shape dining the many recesses 12 side by side.

Next, the surface of the synthetic resin vessel body is modified by UV irradiation treatment and then the silicon dioxide film is formed on its outer side by a liquid phase method to be described next.

First, an SiO₂ saturated aqueous solution in which hydrosilicofluoric acid aqueous solution, hydrofluoric acid and silica gel are at equilibrium as indicated by the following Formula (1) is prepared.

H₂SiF₆ + 2H₂O ⇔ 6HF + SiO₂ Formula (1)

Then, to this SiO₂ saturated aqueous solution, a reaction accelerator is added, thereby to obtain SiO₂ supersaturated aqueous solution. The reaction accelerator can be one capable of shifting the equilibrium of the reaction of the above Formula (1) to the right side. For instance, an accelerator which reacts with water or HF (e.g. aluminum, etc.) can be employed. Incidentally, the reaction in the case of addition of aluminum is indicated by the following Formula (2).

6HF + Al ⇔ H₃AlF₆ + 3/2H₂ Formula (2)

Next, the synthetic resin vessel body is submerged in the SiO₂ supersaturated aqueous solution for depositing the silicon dioxide (SiO₂) film on the surface of this synthetic resin vessel body. For instance, by submerging it for 1 hour, coating of a silicon dioxide film of 200 nm can be formed.

With such liquid phase method as described above, even when the synthetic resin vessel body 10 has a complicated shape having a number of recesses, a silicon dioxide film of a relatively uniform thickness can be formed easily.

Incidentally, the silicon dioxide film of a predetermined thickness should be formed advantageously by repeating a plurality of cycles of submerging, rather than the film of the predetermined thickness is formed at one time. For, this will effectively prevent penetration of an organic solvent from a pinhole when an organic solvent is used as a sample.

Further, in case the biochemical vessel is employed for ultraviolet spectrometry, in order to allow precision determination by avoiding interference of the ultraviolet beam, it is preferred that the silicon dioxide film have a thickness greater than 150 nm or smaller than 100 nm. Further, the thickness smaller than 100 nm is more preferred since with this, such film with uniform thickness in its entirety can be readily obtained, so that determination with even higher precision is made possible.

Incidentally, in this example, a great number of recesses 12 are formed. However, the sole requirement is provision of a plurality of recesses 12. Further, its shape is not limited to the cylindrical shape. Instead, the recess can have any desired shape such as an angular column, a cone, or a pyramid, etc. And, the silicon dioxide film 11 needs to coat at least the inner faces of the recesses 12. Its forming method is not limited to the liquid phase method described above. The method can also be CVD method, PVD method, etc., of course.

### [Second Embodiment]

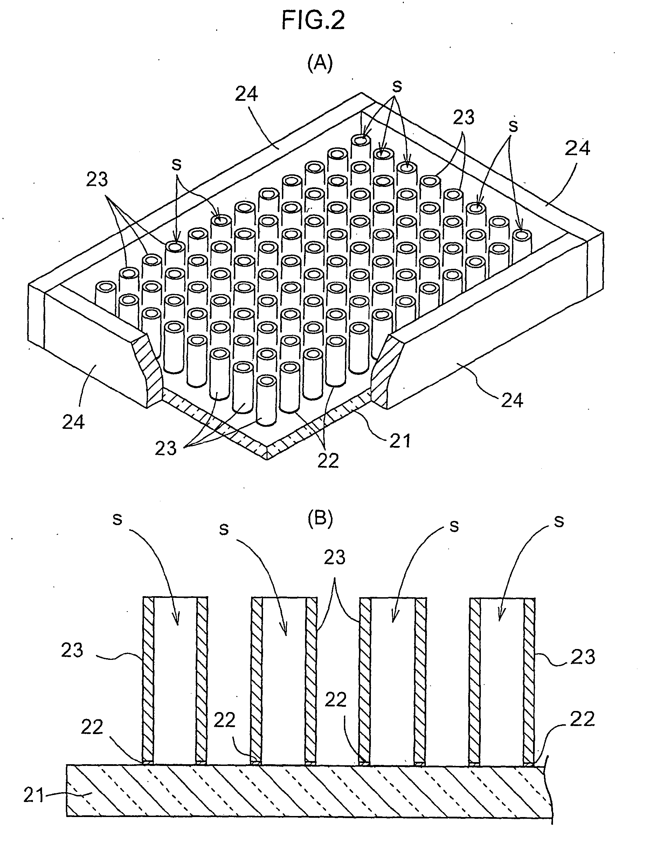

Figs. 2 (A) and (B) show an example of the second embodiment of the present invention. Fig. 2 (A) is a perspective view showing an entire biochemical vessel and Fig. 2 (B) is its partially enlarged section view.

As shown in Fig. 2, this biochemical vessel is formed by attaching a number of cylindrical members 23 erect on a rectangular glass substrate 21 via an inorganic adhesive 22. Many cells (s) are formed by spaces delimited by the glass substrate 21 and the respective cylindrical members 23. In operation, by receiving a plurality of samples within the cells (s) without being mixed with each other, e.g. various analyses or culture of DNA can be carried out. Incidentally, in this embodiment, 8 x 12 = 96 cells (s) are formed as an example.

The glass substrate 21 can be prepared by e.g. cutting open a cylindrical UV transparent glass (PH160 from Phillips Inc.) and heating it into a flat plate, then polishing the plate until it becomes transparent. In this case, the glass advantageously obtains a very high transmission ratio of 85% for ultraviolet ray of 230 nm to 300 nm. Incidentally, the glass substrate 21 can be an UV transparent glass. For example, natural quartz glass having a high UV transmission ratio of 80% or more, a synthetic quartz glass, borosilicate glass can also be employed.

The cylindrical member 23 is formed into the cylindrical shape of such inorganic material as various kinds of glass such as soda-lime glass, various kinds of ceramics, various kinds of metal, etc.

And, the inorganic adhesive 22 is used for adhesive bonding of the cylindrical members 23 to the glass substrate 21. If a low-melting-point glass or a metal solder is employed, this will be advantageous because no dissolution occurs even if an organic solvent is received in the cell (s).

Incidentally, in this case, as shown in Fig. 2 (A), as an example, outer frames 24 formed of soda lime glass are fused to the outer periphery of the glass substrate 21, whereby leak of samples to the outside can be prevented advantageously.

### [Third Embodiment]

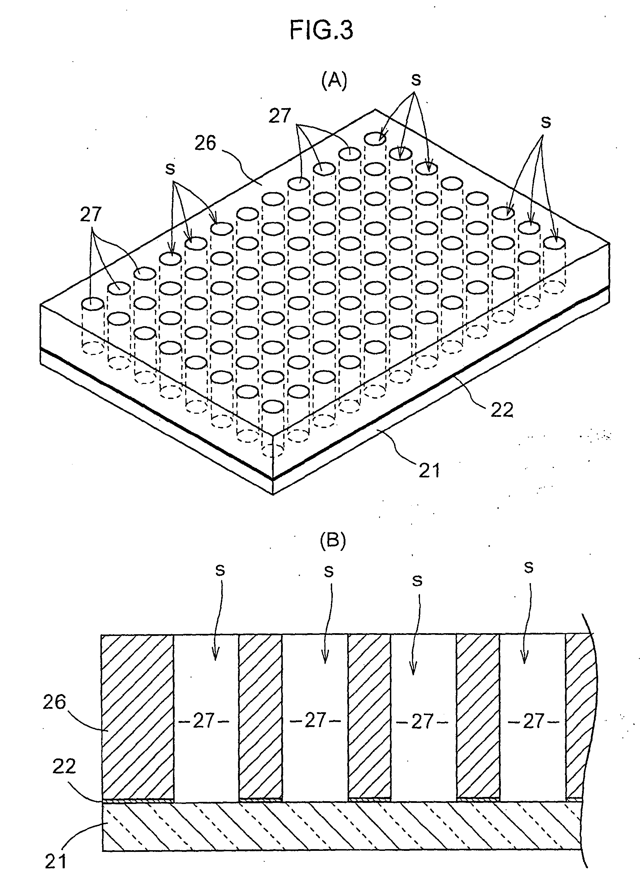

Figs. 3 (A) and (B) show an example of the third embodiment of the present invention. Fig. 3 (A) is a perspective view showing an entire biochemical vessel and Fig. 3 (B) is its partially enlarged section view.

As shown in Fig. 3, this biochemical vessel is formed by bonding a plate-like body 26 to the top of a rectangular glass substrate 21 by means of the inorganic adhesive 22. The plate-like body 26 defines through holes 27 extending through the thickness thereof. Then, a number of cells (s) are formed by spaces delimited by the respective through holes 27 and the glass substrate 21. In operation, by receiving a plurality of samples within the cells (s) without being mixed with each other, e.g. various analyses or culture of DNA can be carried out.

The plate-like body 26 is formed of an inorganic material such as various kinds of glass, e.g. soda lime glass, various kinds of ceramics, various kinds of metal, etc, with defining the many through holes 27 extending through the thickness thereof. In this example, the plate-like body 26 has substantially same planar dimensions as the glass substrate 21.

The rest of the construction is identical to the second embodiment.

### [Fourth Embodiment]

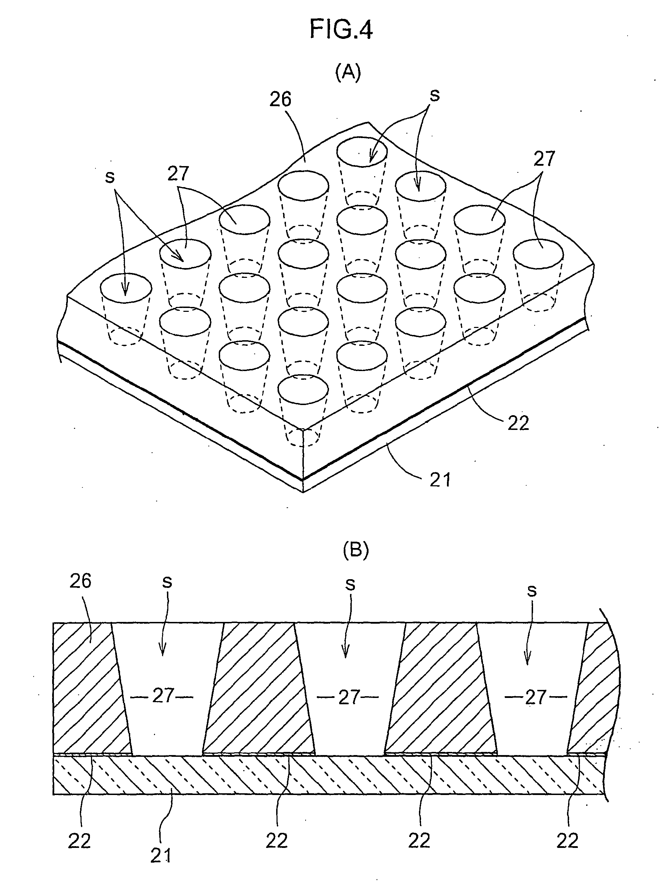

Figs. 4 (A) and (B) show a modified example of the third embodiment of the present invention. Fig. 4 (A) is a perspective view showing an entire biochemical vessel and Fig. 4 (B) is its partially enlarged section view.

As shown in Fig. 4, there is employed a plate-like body 26 defining a number of through holes 27, each hole having a conical shape tapered toward its lower side, i.e. having a progressively reduced diameter toward the same. Then, the lower side of this plate-like body 26 is boned to the top of a rectangular glass substrate 21 by means of the inorganic adhesive 22. A number of cells (s) having a progressively increased diameter toward the upper side are formed by spaces delimited by the respective through holes 27 of the plate-like body 26 and the glass substrate 21. Hence, the inner faces of the cells (s) can be easily washed to be advantageous for repeated use. Further, the plate-like body 26 defining the many through holes 27 can be formed easily.

Incidentally, the material forming the plate-like body 26 should be an inorganic material such as various kinds of glass, various kinds of ceramics, various kinds of metal, just like the foregoing embodiments, if solutions containing organic solvent are to be received in the cells (s). Whereas, the material can be a synthetic resin, in the case of an ordinary aqueous solution.

The rest of the construction is identical to the third embodiment.

### [Fifth Embodiment]

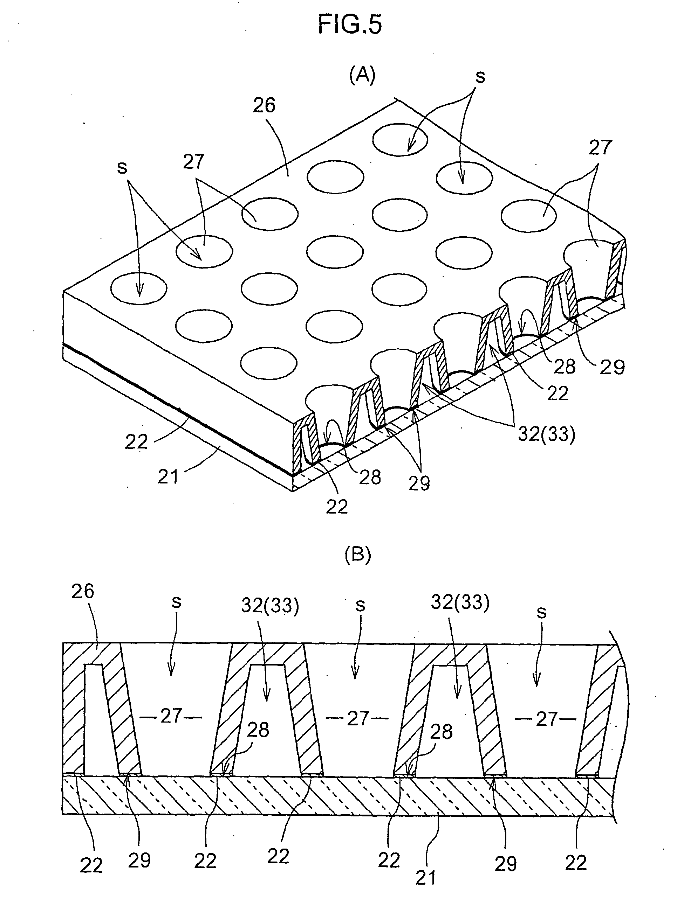

Figs. 5 (A) and (B) show a modified example of the fourth embodiment of the present invention. Fig. 5 (A) is a perspective view showing an entire biochemical vessel and Fig. 5 (B) is its partially enlarged section view.

As shown in Fig. 5, in this embodiment, in order to achieve weight reduction of the biochemical vessel, for example the plate-like body 26 defines concave portions 32 so as to form hollow portions 33 in the plate-like body 26 when the plate-like body 26 and the glass substrate 21 are bonded to each other.

Incidentally, though not shown, in order to form the hollow portions 33 in the glass substrate 21 when the plate-like body 26 and the glass substrate 21 are bonded together, both the plate-like body 26 and the glass substrate 21 may define the concave portions 32, so that the hollow portions 33 may be formed in both the plate-like body 26 and the glass substrate 21, even when the concave portions 32 are defined in the glass substrate 21.

Further, the shape of the through hole 27 to be defined in the plate-like body 26 is not limited to the one tapered toward the lower side, but can be a cylindrical shape having a substantially same diameter over its entire length.

The rest of the construction is identical to the third embodiment.

### [Sixth Embodiment]

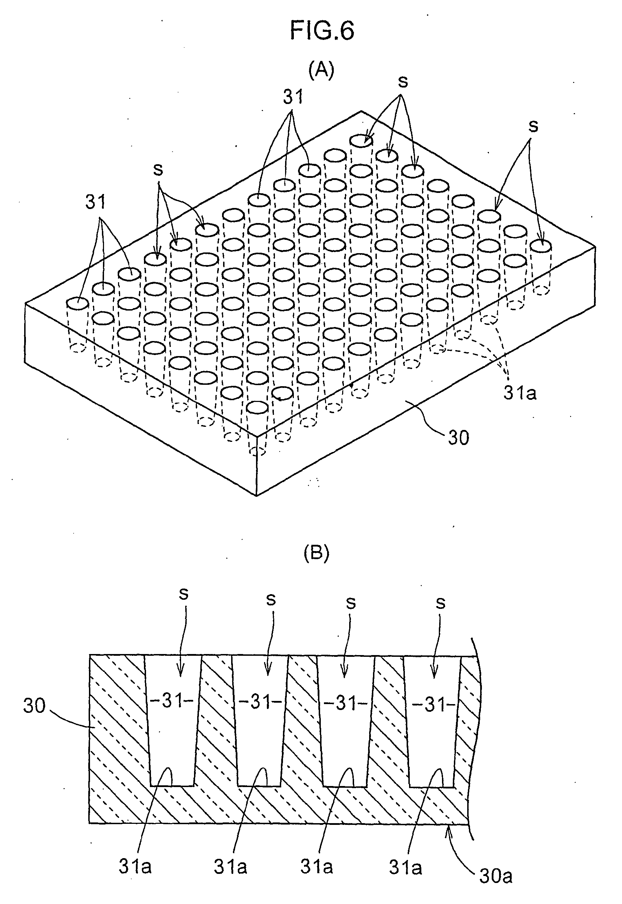

Figs. 6 (A) and (B) show an example of the sixth embodiment of the present invention. Fig. 6 (A) is a perspective view showing an entire biochemical vessel and Fig. 6 (B) is its partially enlarged section view.

As shown in Fig. 6, this biochemical vessel is constructed as an ultraviolet transparent glass molded product 30 defining a number of holes 31 disposed side by side. These holes 31 correspond to the cells (s). In operation, by receiving a plurality of samples within the cells (s) without being mixed with each other, e.g. various analyses or culture of DNA can be carried out. Incidentally, in this embodiment, 8 x 12 = 96 cells (s) are formed as an example.

The ultraviolet transparent glass molded product 30 is formed by rendering an ultraviolet transparent glass (e.g. natural quartz glass, a synthetic quartz glass, borosilicate glass, etc.) into a melted condition or softened condition and then forming this into the shape defining a number of holes 31 disposed side by side by means of various types of molding methods. Incidentally, as shown in the figure, if a bottom face 30a of this ultraviolet transparent glass molded product 30 is formed into a smooth flat surface by a polishing treatment, this will be advantageous for allowing spectrometry to be effected with high precision when a visible beam, an ultraviolet beam or an X-ray used in the spectrometry is caused to be incident on that bottom face 30a along the vertical direction.

Further, in the hole 31, as shown in the figure, its bottom face 31a is formed into a smooth flat surface by a polishing treatment. Hence, spectrometry can be effected with high precision advantageously when a visible beam, an ultraviolet beam or an X-ray used in the spectrometry is caused to be incident on that bottom face 31a along the vertical direction.

Incidentally, if this hole 31 has a shape tapered from its opening toward its bottom face as shown, this will be advantageous in that the vessel can be washed easily to be used repeatedly and also the vessel can be molded easily.

### [Seventh Embodiment]

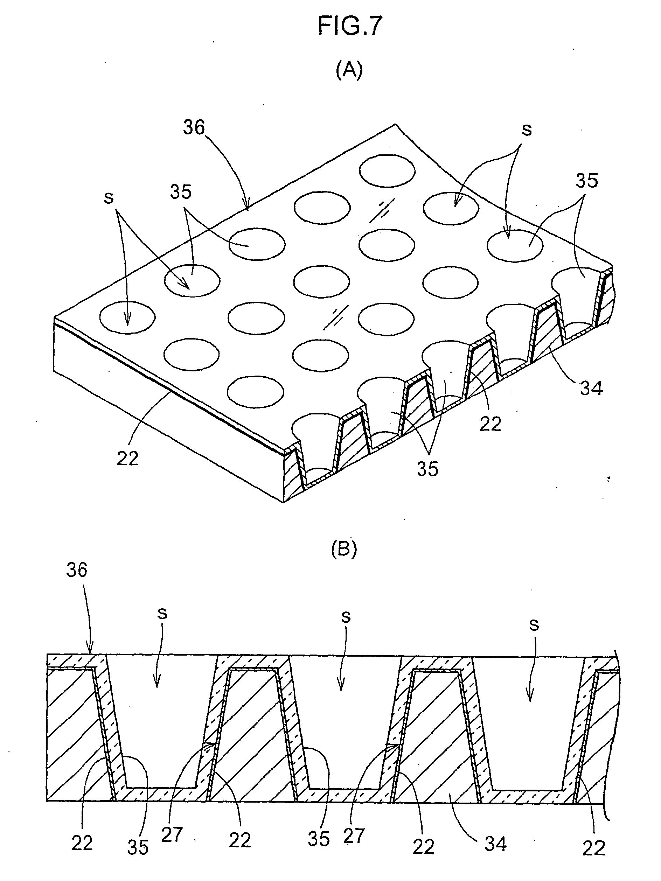

Figs. 7(A) and (B) show an example of the seventh embodiment of the present invention. Fig. 7 (A) is a perspective view showing an entire biochemical vessel and Fig. 7 (B) is its partially enlarged section view.

As shown in Fig. 7, in the case of this biochemical vessel, a plate-like substrate 34 defines a plurality of through holes 27 extending though the thickness thereof and then ultraviolet transparent glass containers 35 are fitted into these respective through holes 27 and peripheral wall-like outer peripheral faces of the glass containers 35 are secured in a gapless manner to the inner peripheral faces of the through holes 27. In operation, by receiving a plurality of samples within the cells (s) formed by the glass containers 35 without being mixed with each other, e.g. various analyses or culture of DNA can be carried out.

The plate-like substrate 34 is formed of an inorganic material such as a resin material like polystyrene resin, various kinds of glass such as soda lime glass, various kinds of ceramics, or various kinds of metal, into a substantially rectangular shape as a whole, with small conical through holes 27 tapered toward the lower side, i.e. having a progressively reduced diameter toward the bottom face, being juxtaposed along the vertical and lateral directions. And, within the respective through holes 27, there are fixedly attached UV transparent glass containers 35. The glass container 35 is made of a glass having a high UV transmission ratio of 80% or higher, such as natural quartz glass, synthetic quartz glass, borosilicate glass, etc. and has a small conical shape tapered, i.e. having a progressively reduced diameter, toward the bottom face side.

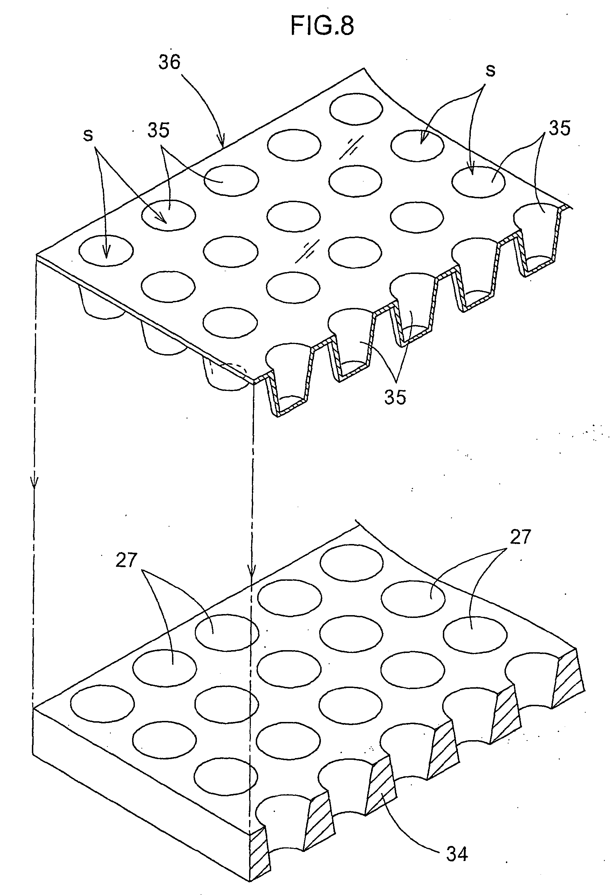

Referring to the manufacturing method of the biochemical vessel, the heated and softened UV transparent glass is formed integrally into a glass container molded product 36 having the many glass containers 35 in one side thereof, as illustrated in Fig. 8 by e.g. a vacuum molding method. Then, this glass container molded product 36 is placed over the plate-like substrate 34 in such as manner as to fit the respective glass containers 35 into the respective through holes 27. Then, these are bonded to each other by means of an inorganic or organic adhesive 22.

In this embodiment too, because the many cells (s) are formed with increased diameter toward the upper face, the inner faces of the cells (s) can be easily washed to be advantageous for repeated use.

### [Eighth Embodiment]

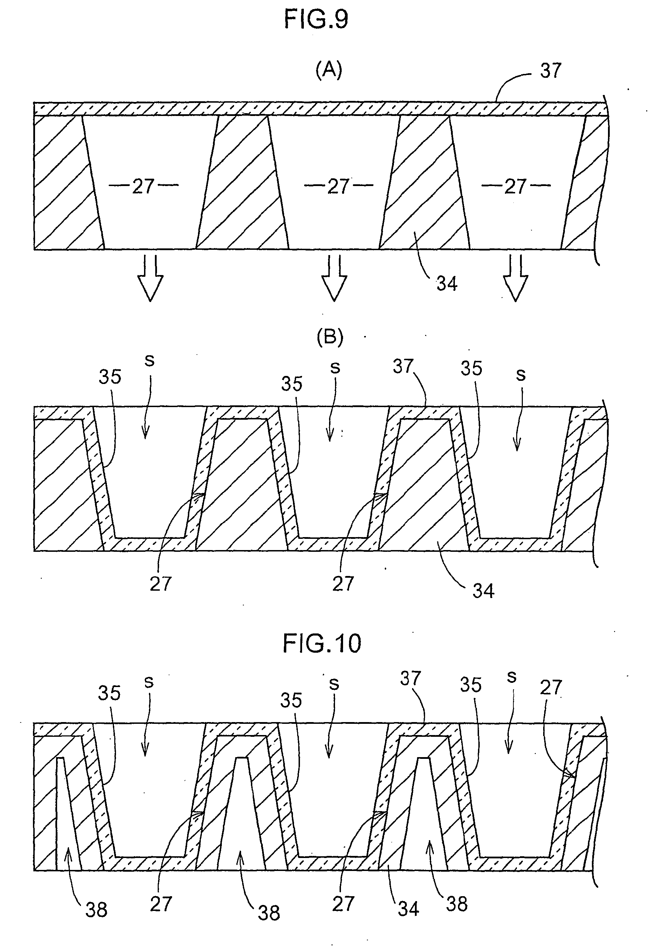

Fig. 9 shows a modified embodiment of the seventh embodiment. In this biochemical vessel, a plate-like substrate 34 is formed of an inorganic material such as various kinds of ceramics, various kinds of metal, etc. and has a rectangular shape as a whole. And, the substrate 34 defines a plurality of through holes 27 having conical shape tapered, i.e. having a progressively reduced diameter, toward the bottom face side and juxtaposed along the vertical and lateral directions. Then, over this plate-like substrate 34, a heated and softened UV transparent glass plate 37 is placed in a gapless manner to be fitted into the respective through holes 27 by e.g. the vacuum molding method. Then, the one side of the plate-like substrate 34 and the inner peripheral faces of the through holes 27 are baked together, whereby the UV transparent glass containers 35 may be fitted into the respective through holes 27, with placing the outer peripheral face of the glass container 35 in gapless contact with and fixed to the inner peripheral face of the through hole 27.

The rest of the construction is identical to the sixth embodiment.

### [Ninth Embodiment]

Fig. 10 shows a modified embodiment of the seventh embodiment or eighth embodiment. In order to achieve weight reduction of the biochemical vessel, the plate-like substrate 34 is formed of a thin plate member and a through hole 27 is formed on the inner side of each cylindrical wall portion 38.

The rest of the construction is identical to the sixth embodiment or the seventh embodiment.

### [Other Embodiments]

Next, other embodiments will be described.
<1> In the foregoing embodiment, there have been described, by way of one example, biochemical vessels having a number of cells (s) and all configured as so-called plate type vessels. The invention is not limited thereto. The outer shape of the vessel is not limited to the plate-type, as long as the vessel defines a number of cells (s).
<2> Further, the invention's biochemical vessels described so far have flat bottom faces and flat bottoms of the cells (s). Hence, these are advantageous for allowing precision determination especially when the determination is made by e.g. a microplate reader for causing a spectrometric visible beam, UV beam or X-ray to enter the bottom face of the biochemical vessel along the vertical direction and then determining its transmission beam.
   Incidentally, UV spectrometry determinations were made experimentally using a microplate reader, with varying the transmission ratio for 230 nm to 300 mm beam to 58%, 65%, 70% and 75% by varying the thickness from the bottom face of the biochemical vessel to the bottom of each cell (s) to 2 mm, 1.7 mm, 1.5 mm and 1.3 mm, respectively. Then, it was found that for precision determination, a transmission ratio of 70% or higher is required.
<3> Incidentally, the biochemical vessel according to the present invention is capable of receiving within each cell (s) not only the organic solvent, but also various kinds of liquid samples such as aqueous solution.
<4> Further, in the detailed disclosure of the present invention, the term, spectrometry, means any determination utilizing a transmission light or a reflected light such as ultraviolet beam, visible beam, fluorescent beam, X-ray beam, etc.
<5> In the case of the biochemical vessel according to the ninth embodiment of the present invention, a plurality of UV transparent glass containers 35 formed separately from each other may be fitted within the respective through holes 27, with the outer peripheral faces of the glass containers 35 being fixed in a gapless manner to the inner peripheral faces of the respective through holes 27 by means of adhesion.

### Industrial Applicability

According to the present invention, it has become possible to provide a biochemical vessel which has high organic solvent resistance and which can be easily manufactured and allows the ultraviolet spectrometry. The invention's biochemical vessel can be used advantageously as a determination plate for a microplate reader for example.

## Claims

1. A vessel for biochemical use, comprising a synthetic resin vessel body (10) having ultraviolet transparency and forming a plurality of recesses (12) side by side, at least inner face portions of the plurality of recesses (12) being coated with a silicon dioxide film (11).

2. The biochemical vessel according to claim 1, herein the silicon dioxide film (11) is formed by a liquid phase method.

3. A biochemical vessel comprising a glass substrate (21) having ultraviolet transparency and a plurality of cylindrical members (23) formed of an inorganic material, the cylindrical members (23) being attached erect on the substrate (21) via an inorganic adhesive (22).

4. A biochemical vessel comprising a glass substrate (21) having ultraviolet transparency and a plate-like body (26) formed of an inorganic material and defining a plurality of through holes (27) along a thickness thereof, said plate-like body (26) being bonded to the substrate (21) via an inorganic adhesive (22).

5. The biochemical vessel according to claim 4, wherein at least one of said plate-like body (26) and said glass substrate (21) defines a concave portion (32) to form a hollow portion (33) in said plate-like body (26) and/or said glass substrate (21) when the plate-like body (26) and the glass substrate (21) are bonded to each other.

6. The biochemical vessel according to claim 3 or 4, wherein said organic adhesive (22) comprises a low-melting-point glass or a metal solder.

7. A biochemical vessel comprising an ultraviolet transparent glass molded product (30) defining a plurality of holes (31) disposed side by side and each having a flat bottom face.

8. The biochemical vessel according to claim 7, wherein said holes 31 are tapered from their openings toward their bottom faces.

9. A biochemical vessel comprising a plate-like substrate (34) defining a plurality of through holes (27) along its thickness and a ultraviolet transparent glass container (35) received within each said through hole, with an outer peripheral face of the glass container (35) being fixed in a gapless manner to an inner peripheral face of said through hole (27).
